# EUROPEAN PATENT SPECIFICATION

(11) **EP 3 529 107 B1**
(45) Date of publication and mention of the grant of the patent: **30.12.2020**
(21) Application number: 17800931.2
(22) Date of filing: 03.10.2017
(51) Int. Cl.: B60Q 1/26, B60R 19/52, F21S 43/239

(54) **RADIATOR GRILLE OF A MOTOR VEHICLE**
KÜHLERGRILL EINES KRAFTFAHRZEUGS
GRILLE DE RADIATEUR D'UN VÉHICULE AUTOMOBILE

(30) Priority: 21.10.2016 SI 201600259
(43) Date of publication of application: 28.08.2019
(73) Proprietor: Hella Saturnus Slovenija Proizvodnja Svetlobne Opreme Za Motorna In Druga Vozila, D.O.O., 1000 Ljubljana (SI)
(72) Inventor: VIRSEK, Marko, 1290 Grosuplje (SI); BABNIK, Blaz, 1000 Grosuplje (SI); TEKAVCIC, Andraz, 1000 Ljubljana (SI); WAGNER, Andrej, 1000 Ljubljana (SI)
(74) Representative: Zacco Patent- und Rechtsanwalts GmbH
(86) International application number: PCT/IB2017/056078
(87) International publication number: WO 2018/073678

(56) References cited:
- EP-A2- 2 816 276
- DE-A1-102015 117 865
- DE-U1-202012 008 792
- DE-U1-202015 103 796
- US-A1- 2016 090 027

## Description

The present invention relates to a radiator grille on a motor vehicle comprising a lighting device with at least one light source.

Placement the light on a radiator/decorative grille of the motor vehicle is disclosed in a publication of a patent application No. DE 10 2012 009 291A1. According to said known solution, the radiator grille provided at the front end of the main portion, is formed with the decorative element designed as the light source or comprises at least one light source. Said decorative element represents a frame encompassing the radiator grille and, respectively, represents an emblem of the motor car manufacturer. Disadvantage of said known solution is the fact that the light source formed as the decorative element is relatively high and can not be integrated into an outer lens of the light source. Said high structure of the light source represents both technical and aesthetic drawbacks.

Another radiator grille is known from DE 20 2012 008 792 U1.

It is the object of the present invention to create a radiator grille on a motor vehicle which remedies drawbacks of the known solution.

The object as set forth is solved, according to the present invention, by features disclosed in the characterising part of claim 1. Detail of the invention is disclosed in respective sub-claims.

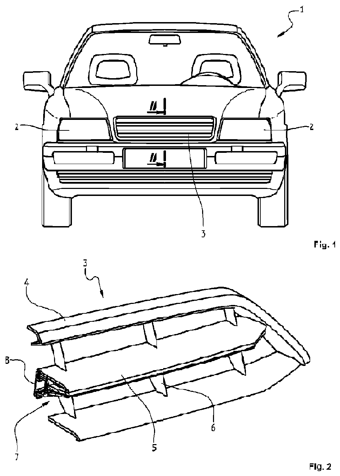

The invention is further described in detail by way of non-limiting embodiment, and with a reference to the accompanying drawings, where
Fig. 1 shows a front view of a motor vehicle having a grille,
Fig. 2 shows a cross-sectional three-dimensional view along the line **II-II** of the radiator/decorative grille of Fig. 1,
Fig. 3 shows a detailed view to a cross-sectional surface of Fig. 2,
Fig. 4 shows another embodiment of Fig. 3,
Fig. 5 shows yet another embodiment of Fig. 3.

The present invention is further described on the basis of an embodiment of a lighting device which is integrated in a grille of a motor vehicle.

A motor vehicle 1 comprises at its front end and in the area between headlamps 2 a grille, in particular in the sense of a grating formed grille 3. The latter comprises a frame 4 and within the frame several horizontally extending sections 5 and several vertically extending sections 6 interconnected in a manner known per se so as to form the grille 3. At least part of the grille 3 that is the part of the frame 4, and/or at least one of said horizontally extending sections and/or at least one of the vertically extending sections 6 of the frame 4 is formed with at least one cavity 7 in which a lighting device 8 is located. Said cavity 7 can be formed in the frame 4 and/or in the section 5, 6 in only one place, in several mutually spaced places, or continuously over the entire length and, respectively, the height of the frame 4 and/or the section 5, 6.

According to an example which is not part of the present invention, said lightning device 8 is arranged on and/or at least at one side of the frame 4 and/or at least at one side of the section 5, 6 of the grille 3.

According to an alternate embodiment at least part of the grille 3 and, respectively, at least part of the frame 4 and/or at least part of the section 5, 6 is formed as a lighting device 8.

Said lighting device 8 comprises a thick-wall light guide 9 inserted according to the present embodiment into said cavity 7 of at least one of the sections 4, 5, 6 of the grille 3. At the side averted from the motor vehicle 1, said cavity 7 is connected by means of a through-hole 10 with the surrounding. A first that is a front end 9' of the light guide 9 extends into said through-hole 10, which is provided at the place of passing through the through-hole 10 with a lens 11. Said lens 11 can be formed as a separate element attached to said front end 9' of the light guide 9, or as an integral part of the light guide 9. A rear end 9" of the light guide 9, that is the end opposite to said front end 9' of the light guide 9, is provided with a least one light source 12 such as a bulb, a light emitting diode, laser diode, OLED diode and similar, for example, the optical axis of said light source being preferably, but not necessary, oriented in direction of driving the motor vehicle. The light emitted by the light sources 12 enters the thick-wall light guide 9 at the rear end 9" thereof where the light homogenise and exits at the front end 9' where the light creates homogeneous lighting of the front surface of the light guide 9.

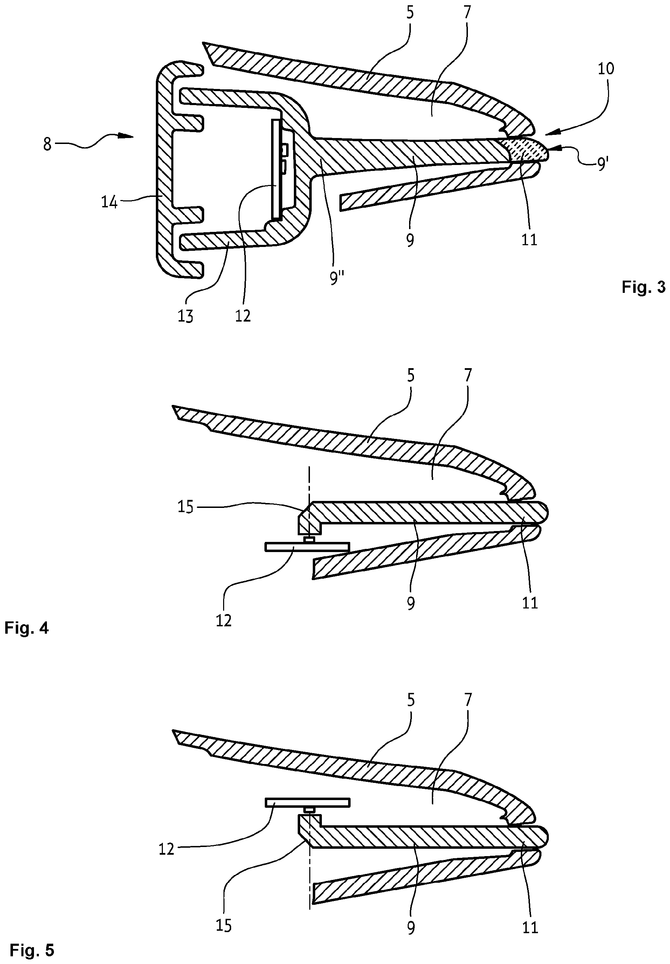

According to the preferred embodiment (Fig. 3), a box 13 is associated with said rear end 9" of the light guide 9, said box can be waterproof closed by a cover 14. With the present embodiment a light source 12 is located in said box 13 being, thus, protected against weather effects. The light source 12 is pressed against the rear end 9" of the light guide 9, thus, allowing a reliable and high-grade light transfer from the light source 12 into the light guide 9. One of possible embodiments of the lighting device according to the invention provides for the rear end 9" of the light guide 9 to be extended approximately perpendicular with regard to the extension of the light guide 9 (Fig. 4 and Fig. 5). In order to allow in this case as good light flow as possible between the light source 12 and the front end 9' and, respectively, the lens 11 of the light guide 9, is the passage between approximately horizontally extending light guide 9 and approximately vertically extending rear end 9" formed with an inclination 15 which directs the light from the source 12 to the lens 11.

The lighting device 8 according to the invention is located in at least one part of the grille 3 of the motor vehicle 1. In particular, the lighting device can be located between two sections 5, 6 of the grille 3, below or above a section 5, 6 of the grille 3, or behind semi transparent or fully transparent part of the grille 3 of the motor vehicle 1. The lighting device 8 extends either in transversal or vertical direction of the motor vehicle 1, and can be curved about at least one axis. The light sources 12 inside the lighting device 8 are preferably arranged in series in direction of the lighting device 8.

The lighting device 8 according to the invention allows for to obtain a very thin exiting luminous surface, such as a visual appearance of a thin luminous line, wherein a homogeneous visual appearance of the luminous front surface of the grille 3 is obtained. In addition, the lighting device 8 can be placed in the grille 3 of the motor vehicle 1 where each single sections 5, 6 of the grille 3 comprise particularly low height. Furthermore, a dynamic function can be implemented to the lightning device 8 according to the invention, where the light sources 12 are arranged in series in a line or in a curvature. Each light source 12 can be controlled separately, thus, enabling sequential activation or deactivation or use of any other dynamic function and, respectively, the animation. Yet further, a multi colour embodiment of the lighting device 8 in the very same optical system is allowed where RGB light sources 12 or several sequences of the light sources 12 in various colours can be utilised.

Described concept of the lighting device 8 allows for several various lighting functions to be carried out, such as a daytime lamp, a position lamp, a welcome lighting, a signal lamp of an alarm device, a side turn lamp, high beam, external lamp to illuminate the surrounding or any other lighting function of the motor vehicle. Moreover, various optical elements can be utilised at the front end 9' of the light guide 9, such as a hologram, an etched structure, two-component injection moulded light guide with the front end of diffuse material, free-form optics, micro optics, or any other form of optical elements, whereby desired visual effect and light distribution is obtained.

## Claims

1. Radiator grille of a motor vehicle with an integrated lighting device (8) comprising at least one light source (12), wherein said lighting device is located in the radiator grille (3), wherein said radiator grille further comprises a frame (4) and within the latter several horizontally extending sections (5) and several vertically extending sections (6), and wherein at least part of the frame (4) and/or at least one of the horizontally extending sections (5) and/or at least one of the vertically extending sections (6) of the frame (4) is formed with at least one cavity (7) in which the lighting device (8) is located, **characterised in that** said lighting device comprises a thick-wall light guide (9) with a front end (9') and a rear end (9") opposite to the front end (9'), wherein the front end (9') of the light guide (9) is provided with a lens (11), wherein the rear end (9") of the light guide is provided with at least one light source (12), wherein said cavity (7) is connected by means of a through-hole (10) with the surrounding and wherein said first, front end (9') of the light guide (9) extends into said through-hole (10), wherein said lens (11) is provided at the place of passing through the through-hole (10).

2. A radiator grille according to claim 1, **characterised in that** at least part of the radiator grille (3) and, respectively, at least part of the frame (4) and/or at least part of the horizontally or vertically extending sections (5, 6) is formed as the lighting device (8).

3. A radiator grille according to any of the preceding claims, **characterised in that** said lens (11) is formed as a separate element attached to said front end (9') of the light guide (9), or as an integral part of the light guide (9).

4. A radiator grille according to any of the preceding claims, **characterised in that** said light source (12) is selected as a bulb, light emitting diode, laser diode or OLED diode the optical axis of said light source being preferably, but not necessary, oriented into direction of driving of a motor vehicle, when the radiator grille (3) is mounted on the vehicle.

5. A radiator grille according to any of the preceding claims, **characterised in that** the lighting device (8) is located at least in a part of the radiator grille (3) of the motor vehicle (1).

6. A radiator grille according to claim 5, **characterised in that** the lighting device (8) is located between two sections (5, 6) of the radiator grille (3) and/or below or above the sections.

7. A radiator grille according to any of the preceding, **characterised in that** a box (13) is associated with the rear end (9") of the light guide (9), wherein the light source (12) is located in said box, which can be waterproof closed by a cover (14).

8. A radiator grille according to any of the preceding claims, **characterised in that** the rear end (9") of the light guide (9) is extended approximately perpendicular with regard to the extension of the light guide (9).

9. A radiator grille according to claim 7, **characterised in that** a passage between approximately horizontally extending light guide (9) and approximately vertically extending rear end (9") of the light guide 9 is formed with an inclination (15).

10. A radiator grille according to any of the preceding claims, **characterised in that** the lighting device (8) is curved about at least one axis.

11. A radiator grille according any of the preceding claims, **characterised in that** the lighting device (8) comprises at least two light sources (12), which are controlled separately.

12. A radiator grille according to claim 10, **characterised in that** the lighting device (8) is realised such a way, that RGB light sources (12) or several sequences of light sources (12) in various colours can be utilised.

13. A radiator grille according to any of the preceding claims with a lighting device (8) utilised as position lamp, welcome lighting, signal lamp of an alarm device, side turn lamp, high beam and/or external lamp to illuminate the surrounding.

## Patentansprüche

1. Kühlergrill eines Kraftfahrzeugs mit einer integrierten Beleuchtungseinrichtung (8) umfassend zumindest eine Lichtquelle (12), wobei die Beleuchtungseinrichtung in dem Kühlergrill (3) angeordnet ist, wobei der Kühlergrill ferner einen Rahmen (4) und innerhalb des letzteren mehrere horizontal sich erstreckende Abschnitte (5) und mehrere vertikal sich erstreckende Abschnitte (6) umfasst, und wobei zumindest ein Teil des Rahmens (4) und/oder zumindest einer der horizontal sich erstreckenden Abschnitte (5) und/oder zumindest einer der vertikal sich erstreckenden Abschnitte (6) des Rahmens (4) mit zumindest einer Aussparung (7) gebildet ist, in welcher die Beleuchtungseinrichtung (8) angeordnet ist, **dadurch gekennzeichnet, dass** die Beleuchtungseinrichtung eine dickwandige Lichtführung (9) mit einem vorderen Ende (9') und einem von dem vorderen Ende abgewandten hinteren Ende (9") umfasst, wobei das vordere Ende (9') der Lichtführung (9) mit einer Linse (11) ausgestattet ist, wobei das hintere Ende (9") der Lichtführung mit zumindest einer Lichtquelle (12) ausgestattet ist, wobei die Aussparung (7) mittels eines Durchgangslochs (10) mit der Umgebung verbunden ist, und wobei sich das erste, vordere Ende (9') der Lichtführung (9) in das Durchgangsloch (10) erstreckt, wobei die Linse (11) an dem Ort des Durchgangs durch das Durchgangsloch (10) vorgesehen ist.

2. Kühlergrill nach Anspruch 1, **dadurch gekennzeichnet, dass** zumindest ein Teil des Kühlergrills (3) und, jeweils, zumindest ein Teil des Rahmens (4) und/oder zumindest ein Teil der horizontal oder vertikal sich erstreckenden Abschnitte (5, 6) als die Beleuchtungseinrichtung (8) ausgebildet ist.

3. Kühlergrill nach einem der vorhergehenden Ansprüche, **dadurch gekennzeichnet, dass** die Linse (11) als ein separates Element gebildet ist, das an dem vorderen Ende (9') der Lichtführung (9) befestigt ist, oder als ein einstückiges Teil der Lichtführung (9) gebildet ist.

4. Kühlergrill nach einem der vorhergehenden Ansprüche, **dadurch gekennzeichnet, dass** die Lichtquelle (12) als eine Birne, eine lichtemittierende Diode, Laserdiode oder OLED-Diode ausgewählt ist, wobei die optische Achse der Lichtquelle bevorzugt, jedoch nicht notwendigerweise, in die Fahrtrichtung eines Kraftfahrzeugs ausgerichtet ist, wenn der Kühlergrill (3) am Fahrzeug montiert ist.

5. Kühlergrill nach einem der vorhergehenden Ansprüche, **dadurch gekennzeichnet, dass** die Beleuchtungseinrichtung (8) zumindest in einem Teil des Kühlergrills (3) des Kraftfahrzeugs (1) angeordnet ist.

6. Kühlergrill nach Anspruch 5, **dadurch gekennzeichnet, dass** die Beleuchtungseinrichtung (8) zwischen zwei Abschnitten (5, 6) des Kühlergrills (3) und/oder unter oder über den Abschnitten angeordnet ist.

7. Kühlergrill nach einem der vorhergehenden Ansprüche, **dadurch gekennzeichnet, dass** ein Kasten (13) mit dem hinteren Ende (9") der Lichtführung (9) verbunden ist, wobei die Lichtquelle (12) in dem Kasten angeordnet ist, welcher durch einen Deckel (14) wasserdicht verschlossen werden kann.

8. Kühlergrill nach einem der vorhergehenden Ansprüche, **dadurch gekennzeichnet, dass** das hintere Ende (9") der Lichtführung (9) etwa rechtwinkelig zur Erstreckung der Lichtführung (9) erstreckt ist.

9. Kühlergrill nach Anspruch 7, **dadurch gekennzeichnet, dass** ein Durchgang zwischen der etwa horizontal sich erstreckenden Lichtführung (9) und dem sich etwa vertikal erstreckenden hinteren Ende (9") der Lichtführung 9 mit einer Neigung (15) gebildet ist.

10. Kühlergrill nach einem der vorhergehenden Ansprüche, **dadurch gekennzeichnet, dass** die Beleuchtungseinrichtung (8) um zumindest eine Achse gekrümmt ist.

11. Kühlergrill nach einem der vorhergehenden Ansprüche, **dadurch gekennzeichnet, dass** die Beleuchtungseinrichtung (8) zumindest zwei Lichtquellen (12) umfasst, die separat gesteuert werden.

12. Kühlergrill nach Anspruch 10, **dadurch gekennzeichnet, dass** die Beleuchtungseinrichtung (8) derart ausgebildet ist, dass RGB-Lichtquellen (12) oder mehrere Sequenzen von Lichtquellen (12) in verschiedenen Farben benutzt werden können.

13. Kühlergrill nach einem der vorhergehenden Ansprüche mit einer Beleuchtungseinrichtung (8), die als eine Positionslampe, ein Begrüßungslicht, eine Signallampe einer Alarmeinrichtung, ein Fahrtrichtungsanzeiger, ein Fernlicht und/oder eine externe Lampe zur Ausleuchtung der Umgebung benutzt wird.

## Revendications

1. Grille de radiateur d'un véhicule automobile avec un dispositif d'éclairage intégré (8) comprenant au moins une source de lumière (12), dans laquelle ledit dispositif d'éclairage est situé dans la grille de radiateur (3), dans laquelle ladite grille de radiateur comprend en outre un cadre (4) et à l'intérieur de ce dernier, plusieurs sections s'étendant horizontalement (5) et plusieurs sections s'étendant verticalement (6), et dans laquelle au moins une partie du cadre (4) et / ou au moins l'une des sections s'étendant horizontalement (5) et / ou au moins l'une des sections s'étendant verticalement (6) du cadre (4) est formée avec au moins une cavité (7) dans laquelle le dispositif d'éclairage (8) est situé, **caractérisée en ce que** ledit dispositif d'éclairage comprend un guide de lumière à paroi épaisse (9) avec une extrémité avant (9') et une extrémité arrière (9") opposée à l'extrémité avant (9'), l'extrémité avant (9') du guide de lumière (9) est pourvue d'une lentille (11), l'extrémité arrière (9") du guide de lumière étant pourvue d'au moins une source de lumière (12), ladite cavité (7) étant reliée au moyen d'un trou traversant (10) avec l'environnement, et ladite première extrémité avant (9') du guide de lumière (9) s'étendant dans ledit trou traversant (10), ladite lentille (11) étant disposée à l'emplacement de passage à travers le trou traversant (10).

2. Grille de radiateur selon la revendication 1, **caractérisée en ce qu'**au moins une partie de la grille de radiateur (3) et, respectivement, au moins une partie du cadre (4) et / ou au moins une partie des sections s'étendant horizontalement ou verticalement (5, 6) est formée comme le dispositif d'éclairage (8).

3. Grille de radiateur selon l'une quelconque des revendications précédentes, **caractérisée en ce que** ladite lentille (11) est formée comme un élément séparé attaché à ladite extrémité avant (9') du guide de lumière (9), ou comme une partie intégrante du guide de lumière (9).

4. Grille de radiateur selon l'une quelconque des revendications précédentes, **caractérisée en ce que** ladite source de lumière (12) est choisie comme une ampoule, une diode électroluminescente, une diode laser ou une diode OLED, l'axe optique de ladite source de lumière étant de préférence, mais non pas nécessaire, orienté dans la direction d'entraînement du véhicule automobile lorsque la grille de radiateur (3) est montée sur le véhicule.

5. Grille de radiateur selon l'une quelconque des revendications précédentes, **caractérisée en ce que** le dispositif d'éclairage (8) est situé au moins dans une partie de la grille de radiateur (3) du véhicule automobile (1).

6. Grille de radiateur selon la revendication 5, **caractérisée en ce que** le dispositif d'éclairage (8) est situé entre deux sections (5, 6) de la grille de radiateur (3) et / ou au-dessous ou au-dessus des sections.

7. Grille de radiateur selon l'une quelconque des revendications précédentes, **caractérisée en ce qu'**une boîte (13) est associée à l'extrémité arrière (9") du guide de lumière (9), la source de lumière (12) étant située dans ladite boîte qui peut être fermée à l'eau par un couvercle (14).

8. Grille de radiateur selon l'une quelconque des revendications précédentes, **caractérisée en ce que** l'extrémité arrière (9") du guide de lumière (9) s'étend approximativement perpendiculairement à l'extension du guide de lumière (9).

9. Grille de radiateur selon la revendication 7, **caractérisée en ce qu'**un passage entre un guide de lumière s'étendant approximativement horizontalement (9) et une extrémité arrière s'étendant approximativement verticalement (9") du guide de lumière (9) est formé avec une inclinaison (15).

10. Grille de radiateur selon l'une quelconque des revendications précédentes, **caractérisée en ce que** le dispositif d'éclairage (8) est incurvé autour d'au moins un axe.

11. Grille de radiateur selon l'une quelconque des revendications précédentes, **caractérisée en ce que** le dispositif d'éclairage (8) comprend au moins deux sources de lumière (12) qui sont commandées séparément.

12. Grille de radiateur selon la revendication 10, **caractérisée en ce que** le dispositif d'éclairage (8) est réalisé de telle sorte que des sources de lumière RVB (12) ou plusieurs séquences de sources de lumière (12) dans différentes couleurs peuvent être utilisées.

13. Grille de radiateur selon l'une quelconque des revendications précédentes avec un dispositif d'éclairage (8) utilisé en tant que lampe de position, éclairage d'accueil, lampe de signalisation d'un dispositif d'alarme, lampe à tour latérale, faisceau élevé et / ou lampe extérieure pour éclairer l'environnement.
